# EUROPEAN PATENT APPLICATION

(11) **EP 4 415 146 A1**
(43) Date of publication of application: **14.08.2024**
(21) Application number: 23847008.2
(22) Date of filing: 27.07.2023
(51) Int. Cl.: H01M 50/451, H01M 50/414, H01M 50/443, H01M 50/403

(54) **SEPARATOR FOR ELECTROCHEMICAL DEVICE, AND ELECTROCHEMICAL DEVICE COMPRISING SAME**

(30) Priority: 28.07.2022 KR 20220093927; 25.07.2023 KR 20230096535
(71) Applicant: LG Energy Solution, Ltd., Seoul 07335 (KR)
(72) Inventor: SUNG, In Hyouk, Yuseong-gu, Daejeon 34122 (KR); KA, Kyung Ryun, Yuseong-gu, Daejeon 34122 (KR); KIM, Hye Won, Yuseong-gu, Daejeon 34122 (KR); KIM, Ji Hyeon, Yuseong-gu, Daejeon 34122 (KR)
(74) Representative: Hoffmann Eitle
(86) International application number: PCT/KR2023/010889
(87) International publication number: WO 2024/025351

(57) **Abstract**

The present disclosure relates to a separator for an electrochemical device including a porous polymer substrate and a porous coating layer formed on at least one side of the porous polymer substrate, wherein the porous coating layer includes a water-based polymer binder, an inorganic particle, and an organic filler, and in the organic filler, adhesive strength is generated in the range of the operating temperature of the electrochemical device.

## Description

### [Technical Field]

The present disclosure claims the benefit of the filing date of Korean Patent Application No. 10-2022-0093927 filed with the Korean Intellectual Property Office on July 28, 2022, the entirety of which is incorporated herein.

The present disclosure relates to a separator for an electrochemical device and an electrochemical device including the same, and a separator which has dimensional stability in a state being impregnated with an electrolyte and at high temperatures.

### [Background Art]

An electrochemical device converts chemical energy into electrical energy using an electrochemical reaction. Recently, lithium secondary batteries, which have high energy density and voltage, long cycle life, and are usable in various fields, have been widely used.

A lithium secondary battery may include an electrode assembly made of a positive electrode, a negative electrode, and a separator arranged between the positive electrode, and the negative electrode, and the electrode assembly may be manufactured by being received in a case together with an electrolyte. A separator is arranged between a positive electrode and a negative electrode to insulate the electrodes, and may include a porous coating layer including a polymer binder and an inorganic particle on at least one surface of a porous polymer substrate. An inorganic particle may be connected to another inorganic particle by a polymer binder to form an interstitial volume, and lithium ions can move through the interstitial volume. In addition to fixing an inorganic particle, the polymer binder can impart an adhesive strength to the porous coating layer, and the porous coating layer can be attached to the porous polymer substrate and electrodes, respectively.

The porous coating layer including a polymer binder and an inorganic particle can prevent thermal shrinkage of the porous polymer substrate, and the separator including the porous coating layer exhibits excellent dimensional stability in a dry state without an electrolyte. However, in a wet state in which the separator is impregnated with the electrolyte, the adhesive strength of the polymer binder may decrease as the polymeric binder is swollen by the electrolyte or as the separator is exposed to a high temperature of about 130°C or higher according to the operation of the lithium secondary battery including the separator. In such a high-temperature wet state, the separator significantly shrinks as the adhesive strength of the porous coating layer is lowered. In particular, a cylindrical battery, in which an electrode assembly is wound and inserted into a case with tension applied to the electrode assembly, had a problem in that the dimensional stability in the wet state is further lowered due to a low content of the polymer binder because the demand on the adhesive strength between the electrodes and the separator is relatively low.

Therefore, studies are being conducted on a separator to secure dimensional stability under high temperature and wet conditions while maintaining a relatively low content of a polymer binder in the porous coating layer.

### [Disclosure]

### [Technical Problem]

An object of the present disclosure is to provide a separator for an electrochemical device in which the dimensional change rate is reduced in a high-temperature wet state.

### [Technical Solution]

An aspect of the present disclosure provides a separator for an electrochemical device including a porous polymer substrate and a porous coating layer formed on at least one side of the porous polymer substrate, wherein the porous coating layer includes a water-based polymer binder, an inorganic particle, and an organic filler, and in the organic filler, an adhesive strength occurs in the range of the operating temperature of the electrochemical device.

The water-based polymer binder may be one or more selected from the group consisting of styrene-butadiene rubber, nitrile-butadiene rubber, acrylonitrile-butadiene rubber, acrylonitrile-butadiene-styrene rubber, and acrylate-containing polymers.

The inorganic particle may be one or more selected from the group consisting of Li₃PO₄, LiₓTi_{y}(PO₄)₃ (0<x<2, 0<y<3), LiₓAl_{y}Ti_{z}(PO₄)₃ (0<x<2, 0<y<1, 0<z<3), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z<4), LiₓP_{y}S_{z} (0<x<3, 0<y<3, 0<z<7), Li₇La₃Zr₂O₁₂, BaTiO₃, BaSO₄, Pb(Zr,Ti)O₃ (PZT), Pb₁₋ₓLaₓZr_{1-y}Ti_{y}O₃ (PLZT, 0<x<1 , 0<y<1), Pb(Mg_{1/3}Nb_{2/3})O₃-PbTiO₃ (PMN-PT), HfO₂, Sb₂O₃, Sb₂O₄, Sb2O₅, SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, SiO₂, Al₂O₃, AlOOH, Al(OH)₃, SiC, TiO₂, H₃BO₃, and HBO₂.

The average particle diameter of the organic filler may be smaller than that of the inorganic particle.

The organic filler may have an average particle diameter (D50) of 50 nm to 500 nm.

The glass transition temperature of the organic filler may be higher than that of the water-based polymer binder.

The range of the operating temperature of the electrochemical device may be 90°C to 130°C, and the glass transition temperature of the organic filler may be within the above range of the operating temperature.

The organic filler may be one or more selected from the group consisting of polyurethane, polyethylene, polypropylene, polystyrene, ethylene vinyl alcohol, and polyester.

The porous coating layer may include the inorganic particle and the organic filler in a weight ratio of 5:1 to 35:1.

In the porous coating layer, the content of the organic filler may be greater than that of the water-based polymer binder.

In the porous coating layer, the water-based polymer binder may have a content of 1 wt% to 5 wt% relative to the total weight of the porous coating layer.

The porous coating layer may be formed by applying a slurry including the water-based polymer binder, the inorganic particle, the organic filler, and a dispersion medium on the porous polymer substrate and drying, and the slurry may have a solid content of 20 wt% to 50 wt%.

The porous coating layer may have an air permeability of 100 s/100 cc to 150 s/100 cc.

A concentration gradient of the organic filler may be formed over the cross-section of the porous coating layer.

The porous coating layer may be present in a greater amount on the opposite side of the porous polymer substrate than on the surface facing the porous polymer substrate.

Another aspect of the present disclosure may provide an electrochemical device including a positive electrode, a negative electrode, and a separator arranged between the positive electrode and the negative electrode, wherein the separator may be a separator for an electrochemical device according to an aspect of the present disclosure.

The separator may have an adhesive strength of 1 gf/20 mm to 20 gf/20 mm to the positive electrode or the negative electrode in a state of being impregnated with an electrolyte.

The separator may have a shrinkage rate of 5% or less in a TD direction in a state being impregnated with an electrolyte at 130°C to 180°C.

The electrochemical device may be a lithium secondary battery.

### [Advantageous Effects]

The separator for an electrochemical device according to the present disclosure includes an organic filler in a porous coating layer, thereby providing an excellent adhesive strength with electrodes even in a wet state impregnated with an electrolyte.

In addition, the present disclosure provides a separator for an electrochemical device with excellent dimensional stability in a high-temperature wet state.

### [Best Model

Hereinafter, each component of the present disclosure will be described in more detail so that those skilled in the art to which the present disclosure belongs can easily practice the same, but this is merely an illustration, and the scope of rights of the present disclosure is not limited by the following contents.

As used herein, the term "include" is used when listing materials, compositions, devices, and methods useful in the present disclosure, and is not limited to the examples listed above.

As used herein, the terms "about" and "substantially" are used to indicate a numerical value or range of degrees or approximations thereto, in consideration of inherent manufacture and material tolerances, and are used to prevent undue exploitation by infringers of the referenced disclosure, where exact or absolute numerical values are mentioned, provided to aid the understanding of the present disclosure.

As used herein, the term "electrochemical device" may refer to a primary battery, a secondary battery, a super capacitor, *etc.*

As used herein, the term "particle size" means D50, which is the particle size corresponding to 50% of the cumulative distribution of the number of particles according to the particle size, unless otherwise specified.

In an embodiment of the present disclosure, there is provided a separator for an electrochemical device, which includes a porous polymer substrate and a porous coating layer formed on at least one side of the porous substrate. The porous coating layer includes a water-based polymer binder, an inorganic particle, and an organic filler, and the organic filler may generate adhesive strength within the range of the operating temperature of the electrochemical device.

The porous polymer substrate electrically insulates a positive electrode and a negative electrode to prevent short circuit, while providing pores through which lithium ions can pass. The porous polymer substrate may have resistance to the electrolyte of an electrochemical device, which is an organic solvent. For example, the porous polymer substrate may include polymer resin such as polyolefins (e.g., polyethylene, polypropylene and polybutene), polyvinyl chloride, polyethylene terephthalate, polycycloolefin, polyethersulfone, polyamide, polyimide, polyimideamide, polyaramid, polycycloolefin, nylon, polytetrafluoroethylene, and copolymers thereof or mixtures, *etc.,* but is not limited thereto. Preferably, the porous polymer substrate may include a polyolefin-based polymer, thus having excellent slurry applicability for forming a porous coating layer, and being advantageous for manufacturing a separator with a thin thickness.

The thickness of the porous polymer substrate may be 1 µm to 100 µm. Specifically, the thickness of the porous polymer substrate may be 10 µm or more and 90 µm or less, 20 µm or more and 80 µm or less, 30 µm or more and 70 µm or less, or 40 µm or more and 60 µm or less. Preferably, the thickness of the porous polymer substrate may be 1 µm or more and 30 µm or less, more preferably 15 µm or more and 30 µm or less, or 8 µm or more and 13 µm or less. By adjusting the thickness of the porous polymer substrate within the above range, it is possible to increase the amount of active materials included in an electrochemical device by minimizing the volume of an electrochemical device while electrically insulating a positive electrode and a negative electrode.

The porous polymer substrate may include pores having an average diameter of 0.01 µm to 10 µm. Specifically, the size of the pores of the porous polymer substrate may be 1 µm or more and 9 µm or less, 2 µm or more and 8 µm or less, 3 µm or more and 7 µm or less, or 4 µm or more and 6 µm or less. By adjusting the pore size of the porous polymer substrate within the above range, it is possible to uniformly coat the coating slurry including an inorganic particle, an organic filler, and a water-based polymer binder, and control the air permeability and ionic conductivity.

A slurry may be applied and dried on at least one surface of the porous polymer substrate to thereby form a porous coating layer to be described later. The slurry may include an inorganic particle, a polymer binder, a dispersion medium, *etc.* Prior to application of the slurry, a surface treatment (e.g., plasma treatment or corona discharge) may be performed on the porous polymer substrate in order to improve impregnability to the electrolyte.

The separator for an electrochemical device may include the porous polymer substrate and a porous coating layer formed on at least one side of the porous polymer substrate. The porous coating layer may include a water-based polymer binder, an inorganic particle, and an organic filler. A porous coating layer may be formed by applying and drying a slurry, which includes a water-based polymer binder, an inorganic particle, and an organic filler, on at least one surface of the porous polymer substrate.

The porous coating layer may include an inorganic particle, which is to improve mechanical properties and insulation of the porous polymer substrate, and a polymer binder, which is to improve adhesive strength between electrodes and a separator. The polymeric binder can bind adjacent inorganic particles and maintain the binding. The inorganic particle may bind with adjacent inorganic particles to provide an interstitial volume, which is a gap between an inorganic particle, and lithium ions can move through the interstitial volume.

As the polymer binder, a water-based polymer binder may be used so that a separate solvent for dispersing the organic filler may not be used when preparing the slurry. The slurry may be prepared by dispersing the polymer binder, the inorganic particles, and the organic filler in a dispersion medium, and a porous coating layer may be formed by a single coating using the slurry. For example, the water-based polymer binder may be one or more selected from the group consisting of styrene-butadiene rubber, nitrile-butadiene rubber, acrylonitrile-butadiene rubber, acrylonitrile-butadiene-styrene rubber, and acrylate-containing polymers. Preferably, the water-based polymer binder may be an acrylate-based polymer.

The inorganic particle may form a uniform thickness of the porous coating layer and may not cause an oxidation-reduction reaction within the range of the operating voltage of an electrochemical device to which it is applied. For example, the inorganic particle may have one or more characteristics of an ability to transfer lithium ions, piezoelectricity, and flame retardancy.

The inorganic particle capable of transferring lithium ions means that it includes a lithium element but does not store lithium and has the function of transporting lithium ions. The inorganic particle capable of transferring lithium ions can transfer and transport lithium ions due to a kind of defect that is present inside the particle structure. Therefore, the lithium ion conductivity in an electrochemical device is improved, and thus, it is possible to promote the improvement of the performance of an electrochemical device.

For example, an inorganic particle capable of transferring lithium ions may be one or more selected from the group consisting of lithium nitride (LiₓN_{y}, 0<x<4, 0<y<2) such as Li₃N; Li₃PO₄; LiₓTi_{y}(PO₄)₃ (0<x<2, 0<y<3); LiₓAl_{y}Ti_{z}(PO₄)₃ (0<x<2, 0<y<1, 0<z<3); LiₓLa_{y}TiO₃ (0<x<2, 0<y<3); LiₓGe_{y}P_{z}S_{w} (0<x<4, 0<y<1, 0<z<1, 0<w<5); SiS₂-based glass (LiₓSi_{y}S_{z},0<x<3, 0<y<2, 0<z<4) such as Li₃PO₄-Li₂S-SiS₂; P₂S₅-based glass (LiₓP_{y}S_{z}, 0<x<3, 0<y<3, 0<z<7) such as LiI-Li₂S-P₂S₅; an LLZO-based one such as Li₇La₃Zr₂O₁₂; and mixtures thereof, but is not limited thereto.

An inorganic particle with piezoelectricity refers to a material which is an insulator under atmospheric pressure but has properties that conduct electricity due to a change in its internal structure when a certain pressure is applied thereto. The inorganic particle can exhibit high permittivity characteristics with a permittivity constant of 100 or more, and when a certain pressure is applied and thereby tension or compression is applied, an electric charge is generated so that one surface is positively charged and the opposite surface is negatively charged, respectively, thereby generating a potential difference between both surfaces. As for the inorganic particle described above, when an internal short circuit between a positive electrode and a negative electrode occurs due to external impact (e.g., local crush, nail, *etc.),* not only a positive electrode and a negative electrode do not come into direct contact due to the inorganic particles coated on a separator, but also a potential difference occurs within the particles due to the piezoelectricity of the inorganic particles, which then causes a movement of electrons between the positive electrode and the negative electrode *(i.e.,* a fine current flow), thereby promoting a gentle voltage reduction of the electrochemical device and subsequent improvement of safety.

For example, the inorganic particle with piezoelectricity may be one or more selected from the group consisting of BaTiO₃, BaSO₄, Pb(Zr,Ti)O₃(PZT), Pb₁₋ₓLaₓZr_{1-y}Ti_{y}O₃ (PLZT)(0<x<1, 0<y<1), Pb(Mg_{1/3}Nb_{2/3})O₃-PbTiO₃ (PMN-PT), HfO₂ (hafnia), and mixtures thereof, but is not limited thereto.

The inorganic particle with flame retardancy can add flame retardancy to a separator or prevent the temperature inside an electrochemical device from rapidly rising.

For example, the inorganic particle with flame retardancy may be one or more selected from the group consisting of Sb₂O₃, Sb₂O₄, Sb2O₅, SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, SiO₂, Al₂O₃, AlOOH, Al(OH)₃, SiC, TiO₂, H₃BO₃, HBO₂, and mixtures thereof, but is not limited thereto.

The average particle diameter (D50) of the inorganic particles may be 700 nm to 1,500 nm, and may be greater than the average particle diameter of the organic filler. Specifically, the average particle diameter of the inorganic particles may be 800 nm or more and 1,400 nm or less, 900 nm or more and 1,300 nm or less, or 1,000 nm or more and 1,200 nm or less. When the average particle diameter of the inorganic particles is smaller than 700 nm, a polymer binder is additionally required for the attachment between the inorganic particles, which is disadvantageous from the aspect of electrical resistance. When the average particle diameter of the inorganic particle exceeds 1,500 nm, the uniformity of the surface of the coating layer is reduced, and the separator and electrodes may be damaged during lamination by protruding particles after coating, and thus a short circuit may occur. When the average particle diameter of the inorganic particle is smaller than that of the organic filler, it becomes difficult for the organic filler to move to the surface of the porous coating layer when the porous coating layer is formed, and thus the adhesive strength to electrodes of the separator is reduced, thereby generating a thermal contraction under high temperature and wet conditions.

The organic filler may be included in the porous coating layer to provide adhesive strength to the electrodes. In the present disclosure, the organic filler may be included in an excessive amount compared to the polymer binder, whose adhesive strength may be reduced by an electrolyte, and thereby secure excellent adhesive strength for electrodes even under high temperature and wet conditions.

As for the organic filler, a material which has the glass transition temperature higher than that of the water-based polymer binder may be used, thereby allowing the dhesive strength to be maintained even under high temperature conditions of 90°C to 130°C, which is the range of the operation temperature of an electrochemical device and at 130°C or higher. Preferably, the glass transition temperature of the organic filler may be included within the range of the operation temperature of an electrochemical device. For example, as for the organic filler, those having a glass transition temperature of 80°C to 180°C may be used, and as for the water-based polymer binder, those having a glass transition temperature of -20°C to 80°C may be used.

The organic filler may be those which have resistance to an electrolyte solution (i.e., an organic solvent) and which may not be dissolved or swollen even when the separator is impregnated with the electrolyte. For example, the organic filler may be one or more selected from the group consisting of polyurethane, polyethylene, polypropylene, polystyrene, ethylene vinyl alcohol, and polyester. Preferably, the organic filler may be polyurethane, ethylene vinyl alcohol, or polyester.

The organic filler may be used in the form of a powder having an average particle diameter (D50) of 50 nm to 500 nm. Specifically, the organic filler may have an average particle diameter of 100 nm or more and 450 nm or less, 150 nm or more and 400 nm or less, or 200 nm or more and 350 nm or less. Preferably, the organic filler may have an average particle diameter of 300 nm or more and 500 nm or less. Within the above range, the average particle diameter of the organic filler is smaller than the average particle diameter of the inorganic particles so that the organic filler can move between the inorganic particles and be distributed on the surface of the porous coating layer, and is densely distributed on the surface of the porous coating layer, so that the separator can maintain attachment to the electrodes even in a wet state impregnated with an electrolyte. When the average particle diameter of the organic filler exceeds the above range, the dispersibility of the organic filler is reduced, thus being unable to obtain a slurry in which solids are uniformly dispersed.

The porous coating layer may include the inorganic particle and the organic filler in a weight ratio of 5:1 to 35:1. Preferably, the porous coating layer may include the inorganic particle and the organic filler in a weight ratio of 5:1 to 32:1. When the inorganic particles are included in an excessive amount compared to the above ratio, the separator is impregnated with an electrolyte, and thus, cannot maintain the attachment to the electrodes. When the organic filler is included in an excessive amount compared to the above ratio, the air permeability of the separator decreases and the electrical resistance increases.

The porous coating layer may include the inorganic particles and the organic filler in excess compared to the water-based polymer binder. Specifically, in the porous coating layer, the content of the inorganic particles may be greater than the content of the organic filler. In the porous coating layer, the content of the inorganic particles may be greater than that of the water-based polymer binder. More specifically, in the porous coating layer, the content of the organic filler may be greater than that of the water-based polymer binder. The porous coating layer may include 1 wt% to 5 wt% of the water-based polymer binder based on the total weight of the porous coating layer. When the content of the water-based polymer binder is less than 1 wt%, an interstitial volume cannot be formed through the binding between inorganic particles and the transfer of lithium ions becomes difficult, thereby increasing electrical resistance. When the content of the water-based polymer binder exceeds 5 wt%, the adhesive strength of the polymer binder is reduced as the separator is impregnated with an electrolyte, and thus, the porous coating layer and the porous polymer substrate may be separated, or the separator and electrodes may be separated.

The porous coating layer may be prepared by applying and drying the slurry, which includes a water-based polymer binder, an inorganic particle, an organic filler, and a dispersing medium, to the porous polymer substrate. The slurry may include a solid content of 20 wt% to 50 wt% based on the total weight of the slurry, and the porous coating layer may have an air permeability of 100 s/100 cc to 150 s/100 cc within the above range.

In the process of applying the slurry to the porous polymer substrate and drying, a concentration gradient of the organic filler may be formed over the cross-section of the porous coating layer. An organic filler with a small average particle size can move between the inorganic particles during the drying process of the dispersion medium, and the porous coating layer may be present in a larger amount on the opposite surface of the porous polymer substrate than on the surface facing the porous polymer substrate. Preferably, the organic filler may be present in the largest amount on the surface of the porous coating layer located on the opposite side of the porous polymer substrate. The organic filler present on the surface of the porous coating layer can provide adhesive strength to the electrodes even in a state where the separator is impregnated with an electrolyte.

The thickness of the porous coating layer may be 0.5 µm to 5 µm. Specifically, the thickness of the porous coating layer may be 1 µm or more and 4.5 µm or less, 1.5 µm or more and 3 µm or less, or 2 µm or more and 2.5 µm or less. Preferably, the thickness of the porous coating layer may be 2 µm or more and 5 µm or less. By adjusting the thickness of the porous coating layer within the above range, shrinkage of the porous polymer substrate may be minimized, thereby being able to implement stable attachment to the porous polymer substrate.

The porous coating layer may further include a dispersing agent to further improve the dispersibility of the inorganic particle. The dispersing agent functions to maintain a uniform dispersion state of inorganic particles in a polymer binder when preparing a slurry. For example, the dispersing agent may include any one or more selected from oil-soluble polyamines, oil-soluble amine compounds, fatty acids, fatty alcohols, sorbitan fatty acid esters, tannic acid, and pyrogallic acid. When the slurry includes a dispersing agent, the porous coating layer may include a dispersing agent in an amount of 5 wt% or less.

The separator may be in a state being impregnated with an electrolyte, or impregnated in an electrolyte and has a wet adhesive strength of 1 gf/20 mm to 20 gf/20 mm, which is the adhesive strength for electrodes at a temperature of 130°C to 180°C. Preferably, the wet adhesive strength may be 5 gf/20 mm to 20 gf/20 mm. Within the above range, the separator may exhibit a shrinkage rate of 5% or less in a TD direction (width direction). When the wet adhesive strength is less than 1 gf/20 mm, the stiffness of the electrode assembly including the separator is reduced, thereby causing problems in assembly or folding due to shrinkage of a separator when manufacturing an electrochemical device, whereas when the wet adhesive strength exceeds 20 gf/20 mm, the impregnation of an electrolyte into a separator is hindered, and thus, lithium dendrites may be precipitated on the surface of the separator.

In another embodiment of the present disclosure, there is provided an electrochemical device including a positive electrode, a negative electrode, a separator disposed between the positive electrode and the negative electrode, and an electrolyte, in which the separator is a separator for an electrochemical device according to the embodiment described above.

The positive electrode and the negative electrode may be obtained by applying and drying an active material on at least one surface of each current collector. The active material is not limited as long as it can be used in an electrochemical device such as a lithium secondary battery.

For example, a positive electrode active material may include lithium cobalt oxide (LiCoO₂); lithium nickel oxide (LiNiO₂); lithium manganese oxide represented by the following chemical formula Li₁₊ₓMn₂₋ₓO₄ (wherein x is 0 to 0.33): LiMnO₃, LiMn₂O₃, and LiMnO₂; lithium copper oxide (Li₂CuO₂); vanadium oxide such as LiVsOs, LiFe₃O₄, V₂O₅, and Cu₂V₂O₇; Ni site type lithium nickel oxide represented by the following chemical formula LiNi₁₋ₓMₓO₂ (wherein M = Co, Mn, Al, Cu, Fe, Mg, B, or Ga, and x = 0.01 to 0.3); lithium manganese composite oxide represented by the following chemical formula LiMn₂₋ₓMₓO₂ (wherein M = Co, Ni, Fe, Cr, Zn, or Ta, x = 0.01 to 0.1) or Li₂Mn₃MO₈ (wherein M = Fe, Co, Ni, Cu, or Zn); LiMn₂O₄ wherein part of Li of the formula is substituted with an alkaline earth metal ion; disulfide compounds; Fe₂(MoO₄)₃, but is not limited thereto.

For example, a negative electrode active material may include carbon such as non-graphitic carbon and graphitic carbon; metal composite oxide such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, Groups 1, 2, and 3 elements in the periodic table, halogens; 0<x≤1; 1≤y≤3; 1≤z≤8); lithium metals; lithium alloys; silicon-based alloys; tin-based alloys; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials, *etc.,* but is not limited thereto.

As for the current collector, a material having conductivity without causing a chemical change in an electrochemical device may be used. For example, a current collector for a positive electrode may be aluminum, nickel, titanium, baked carbon, or stainless steel; those in which the surface of aluminum or stainless steel is treated with carbon, nickel, titanium, and silver; *etc.,* but is not limited thereto. For example, a current collector for a negative electrode may be copper, nickel, titanium, baked carbon, or stainless steel; those in which the surface of copper or stainless steel is treated with carbon, nickel, titanium, and silver; *etc.,* but is not limited thereto. The current collector may be in various forms such as a thin metal plate, a film, a foil, a net, a porous body, and a foam body.

The electrolyte may be a non-aqueous electrolyte including a lithium salt, and in addition to a lithium salt, may include a non-aqueous organic solvent, an organic solid electrolyte, an inorganic solid electrolyte, *etc.*

As the non-aqueous organic solvent, aprotic organic solvents, for example, N-methyl-2-pyrrolidinone, propylene carbonate, ethylene carbonate, butylene carbonate, dimethyl carbonate, diethyl carbonate, gamma-butylolactone, 1,2-dimethoxy ethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triesters, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, ethyl propionate, *etc.* may be used.

As the organic solid electrolyte, for example, polyethylene derivatives, polyethylene oxide derivatives, polypropylene oxide derivatives, phosphoric acid ester polymers, polyagitation lysine, polyester sulfide, polyvinyl alcohol, polyvinylidene fluoride, polymers including ionic dissociation groups, *etc.* may be used.

As the inorganic solid electrolyte, nitride, halide, sulfate, *etc.* of Li, for example, Li₃N, Lil, Li₅NI₂, Li₃NLiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂, *etc.* may be used.

The lithium salt is a material that is easily soluble in the non-aqueous electrolyte, and for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, lithium chloroborane, lower aliphatic carboxylic acid lithium, lithium 4 phenyl borate, imide, *etc.* may be used.

The electrochemical device may be manufactured by inserting a positive electrode, a negative electrode, a separator, and an electrolyte into a case or pouch and sealing the same. For example, the electrochemical device may be a cylindrical type, a prismatic type, a coin type, or a pouch type lithium secondary battery. Preferably, the electrochemical device may be a cylindrical or pouch type lithium secondary battery.

The lithium secondary battery is a unit cell, and as a pack or being modularized, may be used for small devices such as computers, mobile phones, and power tools and power tools powered by an omniscient motor; electric vehicles including electric vehicles (EVs), hybrid electric vehicles (HEVs), plug-in hybrid electric vehicles (PHEVs), *etc.;* electric two-wheeled vehicles including electric bicycles (E-bikes) and electric scooters (E-scooters); electric golf carts; medium to large devices such as power storage systems.

Hereinafter, the present disclosure will be described in more detail through specific Examples and Experimental Examples. The following Examples and Experimental Examples are for illustrating the present disclosure, and the present disclosure is not limited by the following Examples and Experimental Examples.

### Example 1

### Preparation of slurry

35.1 g of alumina with an average particle diameter of 1,000 nm at room temperature (25°C) as an inorganic particle, 3.2 g of a polyurethane emulsion with an average particle diameter of 500 nm as an organic filler (Basekorea, a solid content of 35%), and 1.8 g of an acrylate-based binder (Toyo Chemical, a solid content of 40%) with a Tg of -20°C and an average particle diameter of 150 nm as a polymer binder were prepared. Water and ethyl alcohol were mixed in a weight ratio of 95:5 to prepare 68.5 g of an aqueous dispersion medium; alumina, a polyurethane emulsion, and an acrylate-based binder were injected thereto, and the mixture was dispersed using a paint shaker for 120 minutes; and thereby a slurry was prepared in which an inorganic particle, an organic filler, and a water-based polymer binder were mixed in a weight ratio of 95:3:2.

### Preparation of porous polymer substrate

A polyethylene film (PE, JGP) with a size of 30 cm × 20 cm and a thickness of 9 µm was used as a porous polymer substrate.

### Preparation of separator

The slurry was coated on both surfaces of the polyethylene film using a knife coater, and the process of drying in an oven at 60°C for 20 minutes was repeated twice to form a porous coating layer with each coating having a thickness of 3 µm, and thereby a separator with a total thickness of about 15 µm was prepared.

### Example 2

A separator was prepared in the same manner as in Example 1, except that an inorganic particle, an organic filler, and a water-based polymer binder were mixed in a weight ratio of 80:16:4 using 29.5 g of alumina, 16.8 g of a polyurethane emulsion (a solid content of 35%), and 3.7 g of an acrylate-based binder (a solid content of 40%) in preparing the slurry.

### Comparative Example 1

A separator was prepared in the same manner as in Example 1, except that an inorganic particle and a water-based polymer binder were mixed in a weight ratio of 95:5 using 30 g of alumina, and 3.5 g of an acrylate-based binder (a solid content of 40%) in preparing the slurry.

### Comparative Example 2

A separator was prepared in the same manner as in Example 1, except that an inorganic particle, an organic filler, and a water-based polymer binder were mixed in a weight ratio of 70:14:16 using 25.8 g of alumina, 14.7 g of a polyurethane emulsion (a solid content of 35%), and 14.7 g of an acrylate-based binder (a solid content of 40%) in preparing the slurry.

### Experimental Example 1. Confirmation of air permeability (Gurley) of separators

As an air permeability measurement device, Asahi Seiko's EG01-55-1MR model was used.

The separators prepared in Examples 1 and 2 and Comparative Examples 1 to 3 were fixed to the hollow upper and lower tips of the air permeability measuring device, and the air permeability was obtained by measuring the time required for 100 cc of air to pass through a separator substrate through the set differential pressure applied to the upper and lower tips, and the results are shown in Table 1 below.

### Experimental Example 2. Confirmation of wet adhesive strength of separators

Wet adhesive strength for the electrodes of the separators prepared in Examples and Comparative Examples was confirmed.

As a positive electrode, an aluminum current collector having a size of 5 cm × 5 cm and a thickness of 10 µm, which was coated on both surfaces with a slurry including a positive electrode active material in an amount of 200 g/m² and dried, was used.

As a negative electrode, a copper current collector having a size of 5 cm × 5 cm and a thickness of 6 µm, which was coated on both surfaces with a slurry including a negative electrode active material in an amount of 100 g/m² and dried, was used.

After disposing a separator with a size of 5 cm × 5 cm between the positive electrode and the negative electrode, the separator was pressed with a pressure of 7 kgf/cm² at 100°C, set similarly to the winding tension conditions of a cylindrical type battery, and then inserted into an aluminum pouch with a size of 7 cm × 10 cm. 1 g of an electrolyte (where the EC:EMC weight ratio is 3:7) was injected into the pouch, and the pouch was sealed. After exposing the sealed pouch in an oven at 130°C for 30 minutes, the pouch was disassembled to measure the adhesive strength (wet adhesive strength) of the separator to the electrodes.

The adhesive strength of the separator to the electrodes was measured using the Instron's UTM equipment under the condition of 180° peel test at 200 mm/min, and the results are shown in Table 1 below.

### Experimental Example 3. Confirmation of dimensional stability of separators

The separators subjected to the peel test in Experimental Example 2 were recovered, and the shrinkage rate in the TD direction was measured, and the results are shown in Table 1 below.

**[Table 1]**

| | Weight Ratio (%) of Porous Coating Layer | | | Air Permeability (s/100 cc) | Wet Adhesive Strength (gf/20 mm) | TD Shrinkage Rate (%) |
|---|---|---|---|---|---|---|
| | Inorganic Particle | Organic Filler | Water-Based Polymer Binder | | | |
| Example 1 | 95 | 3 | 2 | 117 | 12 | 3 |
| Example 2 | 80 | 16 | 4 | 143 | 25 | 2 |
| Comparative Example 1 | 95 | - | 5 | 111 | 0 | 35 |
| Comparative Example 2 | 70 | 14 | 16 | 172 | 26 | 9 |

## Claims

1. A separator for an electrochemical device comprising a porous polymer substrate and a porous coating layer formed on at least one side of the porous polymer substrate,
wherein the porous coating layer comprises a water-based polymer binder, an inorganic particle, and an organic filler, and in the organic filler, adhesive strength is generated in the range of the operating temperature of the electrochemical device.

2. The separator of claim 1, wherein the water-based polymer binder is one or more selected from the group consisting of styrene-butadiene rubber, nitrile-butadiene rubber, acrylonitrile-butadiene rubber, acrylonitrile-butadiene-styrene rubber, and acrylate-containing polymers.

3. The separator of claim 1, wherein the inorganic particle is one or more selected from the group consisting of Li₃PO₄, LiₓTi_{y}(PO₄)₃ (0<x<2, 0<y<3), LiₓAl_{y}Ti_{z}(PO₄)₃ (0<x<2, 0<y<1, 0<z<3), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z<4), LiₓP_{y}S_{z} (0<x<3, 0<y<3, 0<z<7), Li₇La₃Zr₂O₁₂, BaTiO₃, BaSO₄, Pb(Zr,Ti)O₃ (PZT), Pb₁₋ₓLaₓZr_{1-y}Ti_{y}O₃ (PLZT, 0<x<1 , 0<y<1), Pb(Mg_{1/3}Nb_{2/3})O₃-PbTiO₃ (PMN-PT), HfO₂, Sb₂O₃, Sb₂O₄, Sb₂O₅, SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, SiO₂, Al₂O₃, AlOOH, Al(OH)₃, SiC, TiO₂, H₃BO₃, and HBO₂.

4. The separator of claim 1, wherein the average particle diameter of the organic filler is smaller than that of the inorganic particle.

5. The separator of claim 1, wherein the organic filler has an average particle diameter (D50) of 50 nm to 500 nm.

6. The separator of claim 1, wherein the glass transition temperature of the organic filler is higher than that of the water-based polymer binder.

7. The separator of claim 1, wherein the range of the operating temperature of the electrochemical device is 90°C to 130°C, and the glass transition temperature of the organic filler is within the above range of the operating temperature.

8. The separator of claim 1, wherein the organic filler is one or more selected from the group consisting of polyurethane, polyethylene, polypropylene, polystyrene, ethylene vinyl alcohol, and polyester.

9. The separator of claim 1, wherein the porous coating layer comprises the inorganic particle and the organic filler in a weight ratio of 5:1 to 35:1.

10. The separator of claim 1, wherein in the porous coating layer, the content of the organic filler is greater than that of the water-based polymer binder.

11. The separator of claim 1, wherein in the porous coating layer, the water-based polymer binder has a content of 1 wt% to 5 wt% relative to the total weight of the porous coating layer.

12. The separator of claim 1, wherein the porous coating layer is formed by applying a slurry comprising the water-based polymer binder, the inorganic particle, the organic filler, and a dispersion medium on the porous polymer substrate and drying, and the slurry has a solid content of 20 wt% to 50 wt%.

13. The separator of claim 1, wherein the porous coating layer has an air permeability of 100 s/100 cc to 150 s/100 cc.

14. The separator of claim 1, wherein a concentration gradient of the organic filler is formed over the cross-section of the porous coating layer.

15. The separator of claim 14, wherein the porous coating layer is present in a greater amount on the opposite side of the porous polymer substrate than on the surface facing the porous polymer substrate.

16. An electrochemical device comprising a positive electrode, a negative electrode, and a separator arranged between the positive electrode and the negative electrode, wherein the separator is a separator for an electrochemical device according to any one of claims 1 to 15.

17. The electrochemical device of claim 16, wherein the separator has adhesive strength of 1 gf/20 mm to 20 gf/20 mm to the positive electrode or the negative electrode in a state of being impregnated with an electrolyte.

18. The electrochemical device of claim 16, wherein the separator has a shrinkage rate of 5% or less in a TD direction in a state being impregnated with an electrolyte at 130°C to 180°C.
